(19) **Europäisches Patentamt**

**European Patent Office**

**Office européen des brevets**

(11) **EP 1 094 455 A2**

(12) **EUROPEAN PATENT APPLICATION**

(43) Date of publication:
25.04.2001 Bulletin 2001/17

(51) Int. Cl.$^7$: **G11B 11/105**

(21) Application number: **00122911.1**

(22) Date of filing: **20.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.10.1999 JP 30133699**

(71) Applicant: **SONY CORPORATION Tokyo (JP)**

(72) Inventors:
• **Shinoda, Masataka,c/o SONY CORPORATION Tokyo (JP)**
• **Tanaka, Yasuhito,c/o SONY CORPORATION Tokyo (JP)**

(74) Representative:
**MÜLLER & HOFFMANN Patentanwälte Innere Wiener Strasse 17 81667 München (DE)**

(54) **Magneto-optical recording medium**

(57)    A magneto-optical recording medium utilizes a magnetically induced super-resolution readout method comprising a process for causing a recorded magnetic domain of a recording layer to be transferred onto a reproduction layer, where reproduction process or recording/reproduction process is implemented by irradiation of a blue-purple laser beam (L) having a wavelength of 350nm to 450nm and/or reproduction process or recording/reproduction process is implemented by means of an object lens (11) having a minimum of 0.7 of the numerical aperture of 0.7 or more in particular, whereby improving the C/N ratio and minimizing jitter components.

To realize the above object, the magneto-optical recording medium comprises at least a reproduction layer (1) and a recording layer (3), where the recording layer comprises a first magnetic film (31) and a second magnetic film (32) comprising a rare-earth transition-metal magnetic film whose composition ranging from compensation composition to transition-metal-predominant composition at room temperature, whereby generating excellent magnetic characteristic throughout a wide temperature range.

FIG. 1

EP 1 094 455 A2

## Description

BACKGROUND OF THE INVENTION

Field of the Invention:

The present invention relates to a magneto-optical recording medium which executes reproduction of data signal by a laser beam by way of utilizing magneto-optical effect. More particularly, the invention relates to a magneto-optical recording medium comprising at least a reproduction layer and a recording layer for executing reproduction process based on magnetically induced super resolution.

Description of the Related Art:

There is such a method for rewritably recording data signal with high density by magneto-optical recording means based on the fundamental principle, by utilizing the thermal energy of a laser beam, which initially causes a partial portion of a magnetic layer of a magneto-optical recording medium to be heated beyond Curie temperature or compensation temperature and then causes coercive force in the heated portion to be decreased or extinguished, followed by a process to cause the direction of magnetization to be inverted into the direction of recording magnetic field externally being added for example before eventually forming information magnetic domain, in other words, executing recording of data signal.

The above-cited magneto-optical recording medium comprises a transparent substrate made of polycarbonate resin, for example, having on a main surface serially built up layers comprising: a dielectric layer of silicon nitride or aluminum nitride, for example; a magnetic recording layer which is made of amorphous film of a rare-earth-transition-metal alloy, for example, and provided with an easy axis of magnetization in the vertical direction with regard to a film surface and surpassing magneto-optical-effect characteristic; another dielectric layer coated with silicon nitride or aluminum nitride, for example; a reflection layer composed of aluminum, gold, or silver, for example; and a protection layer made of ultra-violet-ray-cured type resin, for example.

By causing the above-cited magneto-optical recording medium to be exposed to a laser beam irradiated. from the side of the transparent substrate for example, the above-cited information magnetic domain is formed, in other words, recording of data signal is executed against the magnetic layer. In a case of reproducing the recorded data signal, like the above process, the magneto-optical recording medium is exposed to a laser beam irradiated from the side of the above-cited transparent substrate to detect actual rotating angle of polarized surface via magneto-optical effect such as Kerr effect generated in the information magnetic domain in the magnetic layer to subsequently execute reproduction of recorded data.

Basically, not only in the case of the magneto-optical recording medium, but the linear recording density of optical disks including a disc for digital audio and a disc for digital video, or the like is also determined by the signal-to-noise (S/N) ratio in the course of performing reproduction in most cases. And yet, the amount of signal under reproduction mode is dependent on the cyclic period of bit array of recorded signal, a laser wavelength $\lambda$, and a numerical aperture N.A. of the object lens.

More specifically, bit cyclic period "f" is determined by laser wavelength $\lambda$, of the reproduction optical system and also by optical detection limit, in other words, by optical refraction limit to be determined by the numerical aperture N.A. of the object lens. More precisely, the bit cyclic period "f" at the optical detection limit is defined by equation expressed by way of "$f = \lambda/(2 \text{ N.A.})$".

Accordingly, in order to realize higher density of recorded data signal in the magneto-optical recording medium, it is essential that laser wavelength $\lambda$ of the reproduction optical system be shortened, whereas the numerical aperture N.A. of the object lens be increased.

In recent years, modern technology has developed such a semiconductor laser capable of securing a blue-purple laser beam having a laser wavelength of 350nm to 450nm. Concretely, for example, recording and reproduction of data signal onto and out from the magneto-optical recording medium are about to take place by way of utilizing a blue-purple laser beam having a wavelength of approximately 400nm through a GaN semiconductor laser.

Likewise, in terms of the numerical aperture N.A. of the object lens, a lens system having a numerical aperture N.A. of 0.7 or more has already been realized, and thus, preparation is underway to execute magneto-optical recording and reproduction of data signal against the magneto-optical recording medium by applying such an object lens having a numerical aperture N.A. of 0.7 or more. As cited above, it is possible to realize higher density of the recorded data by condensing the optical detection limit. Further, there is such a proposal on the method for realizing such a reproduction system based on so-called "magnetically induced super resolution readout (reproduction) method" so as to further improve recording density without being restricted by the optical detection limit.

In order to realize the above "magnetically induced super-resolution readout method", in particular, such a magneto-optical recording medium comprising at least a reproduction layer and a recording layer is introduced. This method comprises a process for causing data signal recorded on the recording layer having high coercive force to be transferred onto the reproduction layer. In this method, a polarized surface is subject to rotation by magneto-optical effect of the reproduction layer generated by a laser beam irradiated onto the reproduction layer. By way of detecting the rotation of the polarized surface, readout (reproduction) of recorded data is executed. In this case, by way of utilizing thermal distribution in the reproduction layer within a spot by the reproducing laser beam, a part of recorded data signal is emerged or extinguished in the spot of the reproduction layer in order that the optical reader can restrictively read a single information magnetic domain within a single spot, thus making it possible to reproduce the information magnetic domain based on such a cyclic period being less than the bit cyclic period at the above-referred optical detection limit.

The above-referred magnetically induced super-resolution readout method is disclosed in Japanese Patent Application Publication Laid-Open HEISEI-1-143041/1989 and also in Japanese Patent Application Publication Laid-Open HEISEI-1-143042/1989, both being a basic application of the USP 5,018,119, for example. The magneto-optical recording medium used for implementing the magnetically induced super-resolution readout method essentially comprises a reproduction (readout) layer, an intermediate layer, and a recording layer, which are magnetically combined with each other at room temperature. In the course of the data reproduction process, by way of causing recorded magnetic domain of the reproduction layer heated within irradiated laser beam spot to be expanded or contracted or inverted at a portion bearing higher temperature, interference between data marks is decreased in the reproduction mode to make it possible to perform reproduction process based on such a cyclic period being less than the limit of optical refraction, whereby enabling linear recording density and track-recording density to be promoted as is proposed by the above-disclosed inventions.

Further, as a part of the above-referred magnetically induced super resolution readout method, there is another art so-called "Center Aperture Detection type Magnetic Super Resolution" (this will merely be referred to as "CAD-MSR" in the following description) which is arranged to solely read the recorded bit (i.e., the magnetized recording domain) at the center portion of the reproducing laser-beam spot based on the method disclosed in the Japanese Patent No. 2839783 (Japanese Patent Application Publication Laid-Open HEISEI-5-081717/1995) being a basic application of the USP 5,707,727.

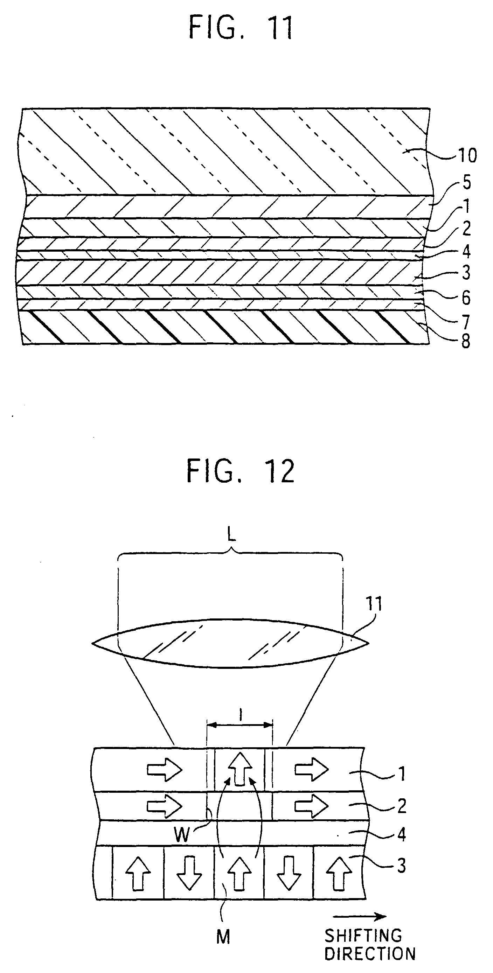

Referring to Fig. 11, as shown in a schematic cross-sectional view, the magneto-optical recording medium used for implementing the above-referred CAD-MSR readout method comprises the following: a transparent substrate 10 made of polycarbonate resin, for example, on which a first dielectric layer 5, a reproduction (readout) layer 1, an auxiliary reproduction layer 2, an non-magnetic intermediate layer 4, a recording layer 3, a second dielectric layer 6, a thermal-control layer 7 are mounted in the upward direction. Further, a protection layer 8 is superficially formed by way of covering the top surface of the thermal-control layer 7.

Nevertheless, as shown via a schematic cross-sectional view in Fig. 12, basically, the above-referred magneto-optical recording medium comprises a reproduction (readout) layer 1, an auxiliary reproduction layer 2, an non-magnetic intermediate layer (cut-off layer) 4, and a recording layer 3. Of these, both the reproduction layer 1 and auxiliary reproduction layer 2 are respectively composed of such a magnetic layer having in-plane magnetic anisotropy. The recording layer 3 comprises such a magnetic layer having perpendicular magnetic anisotropy, whereas the non-magnetic intermediate layer 4 comprises a non-magnetic-material layer.

A recorded mark M being recorded in response to recording signal, in other words, information magnetic domain, is formed (i.e., recorded) on the recording layer 3.

Note that outline arrows shown in Fig. 12 schematically show the direction of magnetization.

Reading (in other words, reproduction) of recorded data out from the magneto-optical recording medium based on the above-referred CAD-MSR method is carried out by irradiating the magneto-optical recording medium with a reproducing laser beam L through an optical lens, i.e., an object lens. Subsequent to the irradiation of the reproducing laser beam L, magnetized effect disappears from the heated portion I of the auxiliary reproduction layer 2 to cause a reproducing window W, i.e., an aperture, to be formed at a demagnetized portion. This in turn enables the reproduction layer 1 to be magnetically coupled with the recording layer 3 via the reproducing window W to further cause the recorded mark M to be transferred onto the reproduction layer 1. Then, the transferred recorded mark M causes the reproducing laser beam to generate Kerr rotation. By way of detecting actual angle of the Kerr rotation performed by the returning laser beam, reading of the recorded signal is eventually executed.

Incidentally, as was described earlier, while performing reproduction of a variety of data in accordance with the magnetically induced super-resolution readout method by lowering limit of the refraction of a blue-purple laser beam having a wavelength of 350nm to 450nm, it is possible to secure high areal density more than double the conventional magnetically induced super-resolution readout method using such a conventional red laser beam having a wavelength of approximately 600nm to 800 nm.

Nevertheless, when introducing the above method, stability of recorded data is apt to be lowered, and yet, reproducing power margin decreases, thus raising problems.

As was mentioned above, when performing reproduction of recorded data by applying such an object lens capable of securing a numerical aperture N.A. of 0.7 or more, in accordance with the above-referred magnetically induced super-resolution readout method, it is possible to secure higher areal density by more than 1.5 times a case of performing reproduction with magnetically induced super-resolution readout method by utilizing such a conventional object lens having a numerical aperture N.A. of about 0.5 to 0.6.

Like the above case, even when introducing the above method, it also results in the lowered stability of the recorded data and decreased reproducing power margin on the way of performing the reproduction, thus raising problems as well.

In a case of combining the above-referred magnetically induced super-resolution readout method via utilization of the blue-purple laser beam, it is possible to condense a spot diameter of the blue-purple laser beam to less than one half the spot diameter of conventional red laser beam being applied to the magnetically induced super-resolution readout method. Thus, beam intensity in the center of the spot of the reproducing laser beam is extremely high in a case of using laser beams with a constant power output required for reproduction. Further, even in a case of combining the magnetically induced super-resolution readout method with an optical object lens having a numerical aperture N.A. of 0.7 or more, the laser-beam spot diameter can be condensed to 1/1.5 or less than the case of using such an object lens having a numerical aperture N.A. of 0.5 to 0.6. Accordingly, even in this case, temperature at the center of the reproducing laser beam spot rises extremely. In consequence, inventors eventually confirmed that, in a case of executing magnetic-optical recording and reproduction, the carrier-to-noise (C/N) ratio is degraded due to the rise of temperature, recorded data is erased due to the rise of temperature, for example, when temperature reached the Curie temperature, data-recording becomes unstable due to repetitive reproduction process at a high temperature, which eventually results in the lowered stability of the recorded data and decreased power margin on the way of the reproduction process as critical problem to solve.

SUMMARY OF THE INVENTION

Based on the above-identified findings, by way of combining the magnetically induced super resolution readout method with utilization of a blue-purple laser beam or by way of combining the magnetically induced super resolution readout method with an object lens having a numerical aperture N.A. of 0.7 or more, inventors have eventually realized such a novel magneto-optical recording medium which is capable of stably realizing magnetic coupling between the reproduction layer and the recording layer irrelevant to the rise of temperature caused by condensed spot diameter of the laser beam, and yet, securing broader reproducing power margin and distinctive magnetic super-resolution characteristic.

The magneto-optical recording medium pertaining to the present invention comprises at least a reproduction layer and a recording layer and on which data-reproduction based on a magnetically induced super resolution readout method utilizing a blue-purple laser beam is carried out. The recording layer of the magneto-optical recording medium of the present invention comprises at least a first magnetic film and a second magnetic film respectively comprising a rare-earth transition-metal magnetic film having a composition ranging from compensation composition to transition-metal-predominant composition at room temperature.

Further, the magneto-optical recording medium pertaining to the present invention comprises at least a reproduction layer and a recording layer, and on which reproduction of data based on magnetically induced super-resolution readout method via utilization of an object lens having a numerical aperture of 0.7 or more is carried out. The recording layer of the magneto-optical recording medium of the present invention comprises at least a first magnetic film and a second magnetic film respectively comprising a rare-earth transition-metal magnetic film having a composition ranging from compensation composition to transition-metal-predominant composition at room temperature.

As was described above, by way of providing the magneto-optical recording medium of the present invention having a recording layer comprising more than two layers each comprising a rare-earth transition-metal magnetic film, as the total physical characteristic of the recording layer comprising more than two layers of magnetic film, an extremely high magnetization can stably be secured throughout a high-temperature range. This in turn makes it possible to stably expand leaking magnetic field from the recorded magnetic domain of the recording layer to the reproduction layer by way of ensuring transfer of magnetic field, whereby improving data reproduction characteristic according to the magnetic super-resolution method.

Further, it is also possible to realize optimum magnetic characteristic, in other words, magnetic coupling, in such atmosphere being close to room temperature, being close to an intermediate temperature range, and being close to a high temperature range. This in turn makes it possible to improve the C/N (carrier-level against noise-level) ratio and decrease generation of jitter components during the reproduction process. Further, by way of optionally decreasing the rate of magnetizing the recording layer at room temperature, data-recording process can stably and properly be implemented.

BRIEF DESCRIPTION OF THE DRAWINGS

The above and other objects, features and advantages of the present invention will become more apparent from the following description of the presently preferred exemplary embodiments of the invention taken in conjunction with the accompanying drawings, in which:

Fig. 1 is a schematic cross-sectional view of an example of the magneto-optical recording medium according to the present invention;

Fig. 2 is a schematic cross-sectional view of another example of the magneto-optical recording medium according to the present invention;

Figs. 3A through 3C are respectively explanatory of physical characteristic of the magneto-optical recording medium according to the present invention;

Fig. 4 is a table showing physical composition and characteristic of magneto-optical recording media according to the first and second embodiments and the first comparative example of the present invention;

Fig. 5 is a table showing measurement results of testing the magneto-optical recording media according to the first and second embodiments and the first comparative example of the present invention;

Fig. 6 is a table showing physical composition and characteristic of the magneto-optical recording media according to the second to sixth comparative examples of the present invention;

Fig. 7 is a table showing measurement results of testing the magneto-optical recording media according to the second through sixth comparative examples of the present invention;

Fig. 8 is a table showing physical composition and characteristic of the magneto-optical recording media according to the third through fifth embodiments and the seventh comparative example of the present invention;

Fig. 9 is a table showing the measurement results of testing the magneto-optical recording media according to the third through fifth embodiments and the seventh comparative example of the present invention;

Fig. 10 is a table showing the measurement results of testing the magneto-optical recording media according to the eighth embodiment and the eighth comparative example of the present invention;

Fig. 11 is a schematic cross-sectional view of a magneto-optical recording medium of a comparative example; and

Fig. 12 is explanatory of an example of the method of reproducing recorded data in accordance with the magnetically induced super resolution readout method.

DESCRIPTION OF THE PREFERRED EMBODIMENTS

Substantially, the magneto-optical recording medium according to the present invention is a magneto-optical recording medium on which data reproduction based on magnetically induced super resolution readout method is carried out. More particularly, although a known magnetically induced super resolution readout method is basically applied for reproducing the magneto-optical recording medium of the present invention, this method is specifically applied to such a case in which reproduction or recording/reproduction of data signal is executed in accordance with a novel method utilizing a blue-purple laser beam having a wavelength of 350nm to 450nm and/or in such a case in which reproduction or recording/reproduction of data signal is executed in accordance with a novel method utilizing an object lens having a numerical aperture N.A. of 0.7 or more.

Basic principle of the magnetically induced super-resolution readout method being applied to the magneto-optical recording medium of the present invention also includes the following: the CAD-MSR method (the center aperture detection magnetically induced super resolution method) which has previously been cited in the description; the front-aperture detection magnetically induced super resolution method (this will merely be called FAD-MSR in the following description) which is described in Japanese Patent Application Publication Laid-Open HEISEI-9-171643/1997; the rear aperture detection magnetically induced super resolution method (this will merely be called RAD-MSR in the following description) which is described in Japanese Patent Application Publication Laid-Open HEISEI-3-093058/1991 being a basic application of the USP 5,168,482; the domain-wall displacement detection method (this will merely be called DWDD in the following description) which was described in Japanese Patent Application Publication Laid-Open HEISEI-6-290496/1994 being a basic application of the USP 6,027,825; and the magnetic amplifying magneto-optical system (MAMMOS) described in Japanese Patent Application Publication Laid-Open HEISEI-8-7350/1998, for example.

Essentially, any of the above-cited magnetically induced super resolution data reproduction methods utilizes a magneto-optical recording medium comprising at least a reproduction layer and a recording layer, where the method comprises a step of transferring a recorded bit of the recording layer to the reproduction layer.

The magneto-optical recording medium according to the present invention comprises at least the above-referred reproduction layer and the recording layer. In particular, the recording layer comprises at least a first magnetic film and a second magnetic film each made of a rare-earth transition-metal magnetic film having a composition ranging from compensation composition to transition-metal-predominant composition at room temperature.

As one of the practical forms of the present invention, a magneto-optical recording medium is reproduced by applying the above-referred CAD-MSR method, where data signal is reproduced from the magneto-optical recording medium solely by means of a blue-purple laser beam.

Fig. 12 is explanatory of the method of reproducing data signal according to the CAD-MSR method. When implementing the CAD-MSR method for reproduction of data on the magneto-optical recording medium of the present invention, an applicable laser beam L is specifically defined to be the a blue-purple laser beam having a wavelength of 350nm to 450nm or/and the applicable object lens 11 is defined to be the one having a numerical aperture N.A. of 0.7 or more.

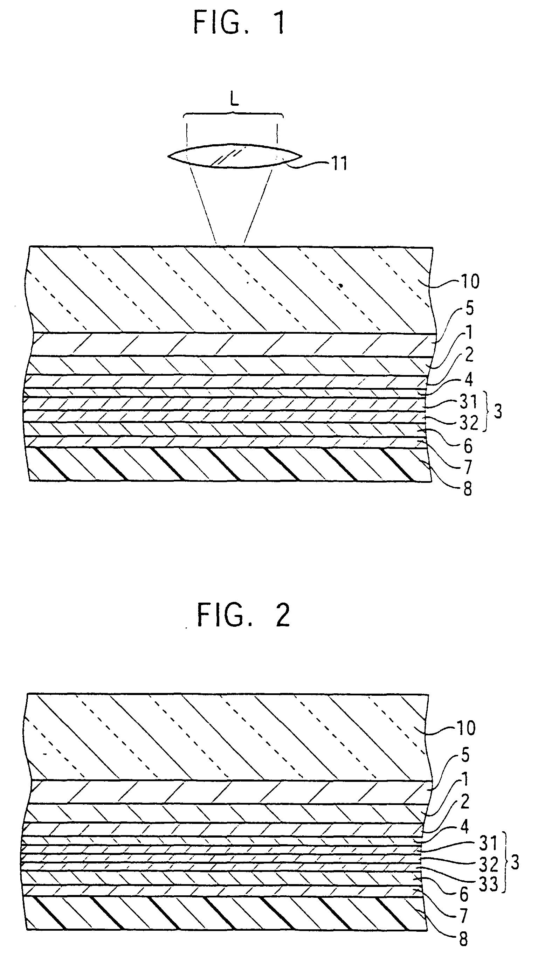

Fig. 1 and Fig. 2 respectively designate schematic cross-sectional views of a variety of examples of the magneto-optical recording medium of the present invention. Any of the magneto-optical recording media of the present invention is applied to the reproduction based on the CAD-MSR method, for example. It should be noted however that the scope of the invention is not solely restricted within the illustrated structures.

In the practical examples of the magneto-optical recording media shown in Fig. 1 and Fig. 2, it is so structured that a first dielectric film 5, a reproduction (readout) layer 1, an auxiliary reproduction layer 2, an non-magnetic intermediate layer 4, a recording layer 3, a second dielectric layer 6, and a thermal-control layer 7, are serially built up on a surface of a transparent substrate 10 made of polycarbonate resin, for example. Further, a protection layer 8 is superficially formed by way of covering the top surface thereof.

An example shown in Fig. 1 incorporates the recording layer 3 which comprises a first magnetic film 31 and a second magnetic film 32. In this case, the first and the second magnetic films 31 and 32 are respectively made of a rare-earth transition-metal magnetic film whose composition ranges from compensation composition to transition-metal-predominant composition at room temperature.

Alternatively, it is also possible to have the first and the second magnetic films 31 and 32 by applying a magnetic film made of, for example, a TbFeCo-based rare-earth transition-metal having a composition ratio being different from each other between the rare-earth metal component and the transition metal component.

Alternatively, it is also possible to have the first and second magnetic films 31 and 32 by applying mutually different structural materials. For example, the first magnetic film 31 may comprises a magnetic film made of a GdFeCo-based rare-earth transition-metal and the second magnetic film 32 may comprises a magnetic film made of a TbFeCo-based rare-earth transition-metal.

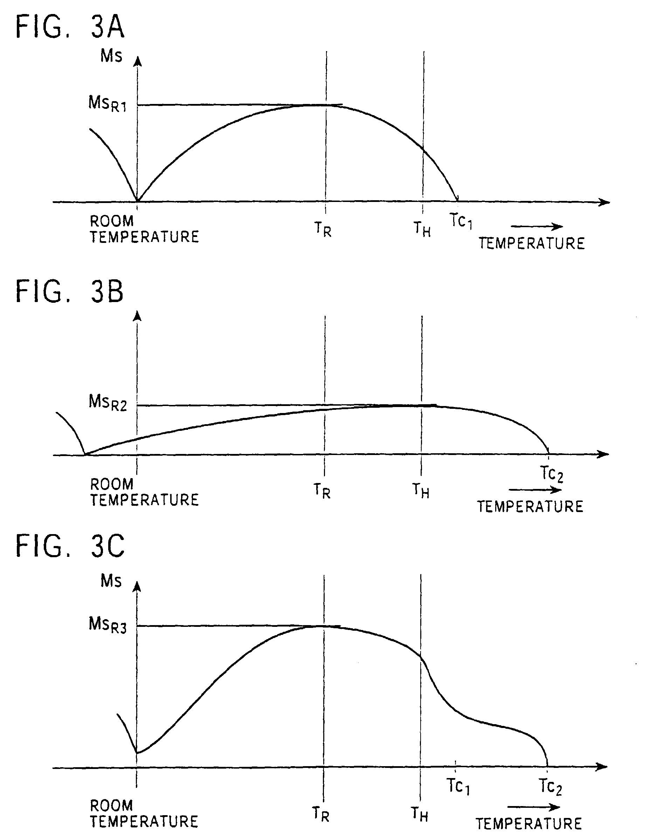

As is shown in Figs. 3A and 3B, the first and second magnetic films 31 and 32 are respectively made of a rare-earth transition-metal having a composition ranging from compensation composition to transition-metal-predominant composition at room temperature, as described above. On the other hand, temperature characteristic of saturated magnetization Ms differs between the first magnetic film 31 and the second magnetic film 32. For example, despite of relatively low Curie temperature $Tc_1$, the first magnetic film 31 contains rather high peak value $Ms_{R1}$ of the saturated magnetization Ms. For example, in a case of using such a magnetic film having a peak value in the vicinity of reproduction temperature $T_R$, whereas, compared to the first magnetic film 31, even when the peak value $Ms_{R2}$ of the saturated magnetization Ms of the second magnetic film 32 corresponds to $Ms_{R2} < Ms_{R1}$, the temperature indicating the peak value $Ms_{R2}$ is present in the vicinity of the maximum temperature generated by the irradiated laser beam which is much higher than the peak temperature of the first magnetic film 31. Accordingly, the second magnetic film 32 comprises such a magnetic film having a relatively wide temperature range in which saturated magnetization is present, in other words, the second magnetic film 32 comprises such a magnetic film having characteristic in which a Curie temperature $Tc_2$ is high.

In the recording layer 3, the first and second magnetic films 31 and 32 individually have specific magnetic characteristic being different from each other, where the two different magnetic characteristics are synthesized into the one shown in Fig. 3C, whereby enhancing the peak value $Ms_{R3}$, and yet, the resultant recording layer 3 generates quite high degree of saturated magnetization which cannot be realize with a magnetic films comprising a single magnetic film throughout high temperature range even in presence of the maximum temperature $T_H$ generated by the irradiated laser beam.

Fig. 1 shows a case of the magneto-optical recording medium having the structure in which the recording layer 3 of the magneto-optical recording medium comprises two layers of the first and second magnetic films 31 and 32. On the other hand, it is also possible to have the recording layer 3 with two or more layers, for example, with triple layers comprising the first, second, and the third magnetic films 31, 32, and 33, as shown in Fig. 2. Even in this case, the three magnetic films 31, 32 and 33 are individually made of a rare-earth transition-metal magnetic film whose composition ranges from compensation composition to transition-metal-predominant composition at room temperature.

Further, even in this case, at least one of the three magnetic films 31, 32 and 33 is made of such a magnetic film having relatively wide temperature range at which saturated magnetization is present, in other words, having a high Curie temperature even though the peak value of the saturated magnetization is lower than that of the other two magnetic films for example.

Even in the above case, although the first, second, and the third magnetic films 31 through 33 are respectively made of a TbFeCo-based rare-earth transition-metal magnetic film whose composition ratio of the rare-earth metal Tb and the transition metal FeCo is variable with regard to at least more than one of the above-referred three layers.

Alternatively, by way of composing one of the three magnetic films 31 through 33 with a GdFeCo-based rare-earth transition-metal magnetic film and the other two magnetic films with a TbFeCo-based rare-earth transition-metal magnetic film, layer-built magnetic films bearing different magnetic characteristic are formed as the recording layer 3. This in turn makes it possible to optionally select total characteristic of the three magnetic films, i.e., temperature characteristic of the saturated magnetization, whereby completing three magnetic layers capable of generating a high saturated magnetization even in the high-temperature zone and also capable of generating wide-range characteristic.

According to the result of trial application of the CAD-MSR reproduction method using the magneto-optical recording medium of the present invention, it was confirmed that the C/N (carrier level against noise-level) ratio and the reproducing power margin were respectively promoted, and yet, jitter components were decreased as a result of utilizing a blue-purple laser beam having a wavelength of 350nm to 450nm as a reproducing laser beam and also as a result of utilizing such an object lens 11 having numerical aperture N.A. of 0.7 or more, being greater than that of any of the conventional object lenses.

Since the recording layer 3 of the magneto-optical recording medium of the present invention comprises a plurality of layer-built magnetic films, and yet, as mentioned above, since it is so arranged that a high degree of saturated magnetization can be secured throughout wide temperature range including an extremely high temperature zone, even in a case of reproduction process in which the recording layer 3 is irradiated with highly intense reproducing laser-beam spot, magnetized effect of the recording layer 3 is prevented from being degraded. For example, by way of applying the CAD-MSR method, it is possible to transmit a high degree of leaking magnetic field to the reproduction layer 1 from the recorded mark M of the recording layer 3 via the reproducing window W shown in Fig. 12. Accordingly, the above-referred improvement of the C/N ratio and the power margin in the course of the reproduction process is attributable to the capability to assuredly transfer the recorded mark M onto the reproduction layer 1.

Next, practical forms of the present invention will be described below by referring to actual embodiments of the inventive magneto-optical recording medium. It should be understood however that the scope of the embodiments of the invention is not solely limited to the exemplification shown below.

〈The First Embodiment〉

To implement the first embodiment, a transparent substrate 10 made of polycarbonate resin with a diameter of 120mm, thickness of 0.6 mm, and a track pitch of 0.35 μm accommodating track grooves therein, was utilized. Next, as shown in Fig. 1, the first dielectric film 5, the reproduction layer 1, the auxiliary reproduction layer 2, the non-magnetic intermediate layer 4, the recording layer 3, the second dielectric layer 6, and the thermal-control layer 7, were serially built up on the transparent substrate 10. In addition, a protection layer 8 was formed by way of superficially covering the top surface of the thermal-control layer 7.

The above-referred layers were individually formed via the processes shown below. Initially, targets comprising Si, Tb, Gd, FeCo, Fe, and Al were respectively secured to a magnetron sputtering apparatus incorporating a pair of vacuum chambers. Next, the transparent substrate 10 was secured to a substrate holder, and then, air remaining in the vacuum chambers was fully evacuated via a cryopump until high vacuum below $1 \times 10^{-5}$(Pa) was eventually generated.

Next, while evacuating air out from the first vacuum chamber, 50 (sccm) of argon gas and 30 (sccm) of $N_2$ gas were respectively fed into the first vacuum chamber, and then, after adjusting a main valve until pressure inside of the first vacuum chamber reached 0.24 (Pa), by applying RF reactive sputtering process onto Si target, a silicon nitride film was formed on the transparent substrate 10 to be 40nm in thickness, thus completing formation of the first dielectric film 5.

Next, the valves for feeding argon gas and $N_2$ gas were respectively closed, and then, the substrate holder was transferred from the first vacuum chamber to the second chamber. Then, air remaining in the second vacuum chamber was fully evacuated by the cryopump until high vacuum below $1 \times 10^{-5}$(Pa) was eventually generated.

Next, while evacuating air out from the second vacuum chamber, 100 (sccm) of argon gas was fed into the second vacuum chamber. After adjusting the main valve until pressure inside of the second vacuum chamber reached 0.12 (Pa), by applying DC-sputtering process, the reproduction layer 1 of 30nm thick GdFeCo, the auxiliary reproduction layer 2 of 8nm thick GdFe, the non-magnetic intermediate layer 4 of 4nm thick Al, the first magnetic film 31 of 10nm thick GdFeCo of the recording layer 3, and the second magnetic film 32 of 60nm thick TbFeCo of the recording layer 3, were serially built up on the first dielectric film 5.

Next, the valve for feeding argon gas was closed, and then the substrate-holder was transferred from the second vacuum chamber to the first vacuum chamber. Then, while placing the substrate holder inside of the first vacuum chamber, air remaining in the second vacuum chamber was fully evacuated by the cryopump until high vacuum below $1 \times 10^{-5}$ (Pa) was eventually generated.

Next, while evacuating air out from the first vacuum chamber, 50 (sccm) of argon gas and 30

(sccm) of $N_2$ gas were fed into the first vacuum chamber. After adjusting the main valve until pressure inside of the first vacuum chamber reached 0.24 (Pa), by applying RF reactive sputtering process onto Si target, silicon nitride film was formed to be 20nm in thickness, thus completed formation of the second dielectric film 6.

Next, the valves for feeding argon gas and $N_2$ gas were respectively closed, and then, air remaining in the first vacuum chamber was fully evacuated by the cryopump until high vacuum below $1 \times 10^{-5}$ (Pa) was eventually generated.

Then, while evacuating air out from the first vacuum chamber, 100 (sccm) of argon gas was fed into the first vacuum chamber, and then, after adjusting the main valve until pressure inside of the first vacuum chamber reached 0.23 (Pa), by applying DC-sputtering process, the thermal control layer 7 of 40nm thick aluminum was formed on the second dielectric film 6.

Next, the transparent substrate 10 on which the above component films were laminated was drawn out of the vacuum chamber. Finally, the protection film 8 for protecting the thermal control layer 7 comprising aluminum was formed to be 20μm in thickness with ultra-violet-ray-cured resin via coating followed by final curing of the coated resin via irradiation with UV-rays.

As a result of implementing the above serial processes, the magneto-optical recording medium in which the first magnetic film 31 of the recording layer 3 was formed with a magnetic film having coercive force of 200 (Oe) and a composition of transition-metal-predominant metal at room temperature, and the second magnetic film 32 of the recording layer 3 was formed with a magnetic film having a compensation composition at room temperature was formed. The magneto-optical recording medium will be referred to as an optical disk No. 1 in the following description.

〈The Second Embodiment〉

Basically, the second embodiment conforms to the method and structural arrangement of the first embodiment except for the composition of the second magnetic film 32, which comprises transition-metal-predominant composition at room temperature. The novel magneto-optical recording medium based on the second embodiment will be referred to as an optical disk No. 2 in the following description.

〈Comparative Example 1〉

The comparative example 1 was also based on the method and structural arrangement identical to those which were provided for the first embodiment except for the composition of the second magnetic film 32, which comprises the rare-earth metal predominant composition at room temperature. The magneto-optical recording medium of the comparative example 1 will be referred to as an optical disk No. 3 in the following description.

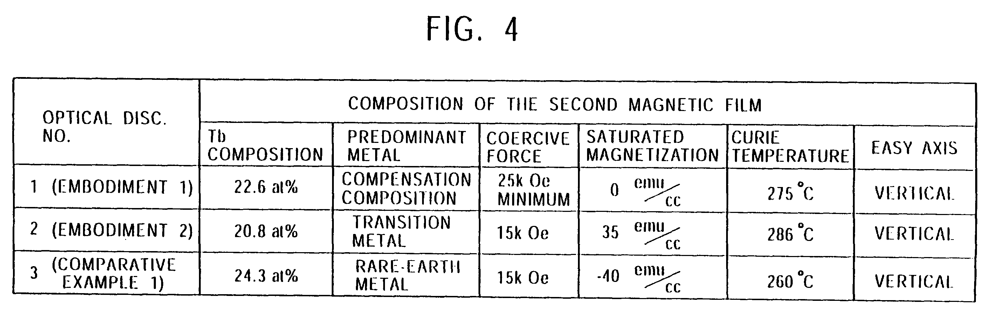

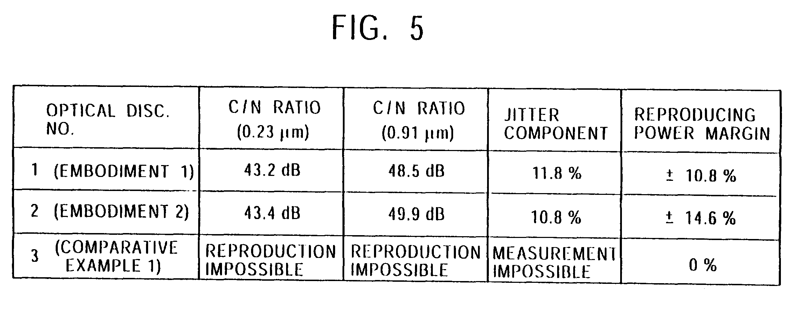

Fig. 4 designates compositions of the second magnetic film 32 of the above-referred optical disks No. 1, No. 2, and No. 3. In Fig. 4, it is noted that the first magnetic film 31 comprises a transition-metal-predominant magnetic film having coercive force of 200 (Oe), saturated magnetization of 128 emu/cc, and Curie temperature of 345° C. In addition, in the column of saturated magnetization, a positive value means "transition-metal-predominant" and a negative value means "rare-earth metal predominant". On the other hand, Fig. 5 designates measurement results of reproduction characteristic in terms of the C/N ratio, jitter components, and the reproducing power margin.

The above measurement was based on the reproduction method based on the CAD-MSR. In the measurement, the numerical aperture N.A. of the object lens was adjusted to be 0.6, whereas the wavelength of the reproducing laser beam was adjusted to be 406nm.

Recording process was executed in accordance with pulse-irradiated magnetic field modulation recording method by way of converting light-emitting laser waveform into pulse waveform, where the duty ratio of the pulse waveform was adjusted to be 35% of the system-clock periodic time.

The linear velocity of the optical disk was adjusted to be 3.7m/sec., whereas external recording magnetic field was adjusted to be ±350 (Oe). Measurement of the above-referred reproduction characteristics was executed without adding external magnetic field at the time of reproduction.

Under the above-specified condition, the ratio of carrier-level against noise-level (C/N) while recording 0.23μm and 0.91μm of the mark length, jitter components while recording random pattern modulated by (1.7) RLL at 0.17 μm of the bit length, and the reproducing power margin at less than 20% of the jitter components, were respectively measured.

〈Comparative Example 2〉

Except for the single-layer structure made of rare-earth metal predominant film at room temperature comprising 70nm thick TbFeCo alloy prepared for the formation of the recording layer 3 shown in Fig. 11, another magneto-optical recording medium for the comparative example 2 was also fabricated based on the method and structural arrangement identical to those which were provided for the first embodiment. This will be referred to as an optical disk No. 4 in the following description.

〈Comparative Example 3〉

Although structural arrangement of the third comparative example was identical to that was provided for the second comparative example, the recording layer 3 of the second comparative example was made to be a single-layer magnetic film having a compensation composition at room temperature. The magneto-optical recording medium prepared for the third comparative example will be referred to as an optical disk No. 5 in the following description.

〈Comparative Examples 4, 5, and 6〉

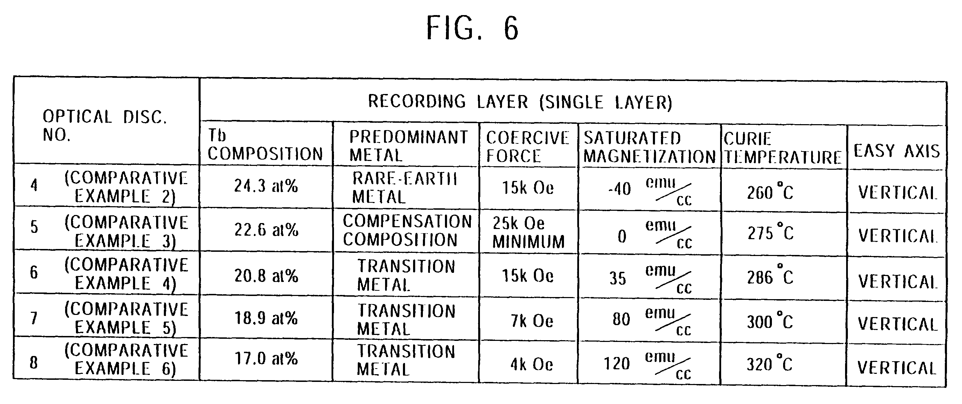

Although structural arrangement of the fourth, the fifth, and the sixth comparative examples was identical to that was provided for the second comparative example, the recording layers 3 of these comparative examples were respectively formed with a single-layer magnetic film having a transition-metal composition which is predominant at room temperature. This composition was varied as shown in Fig. 6. These magneto-optical recording media will be referred to as optical disks No. 6, No. 7, and No. 8, in the following description.

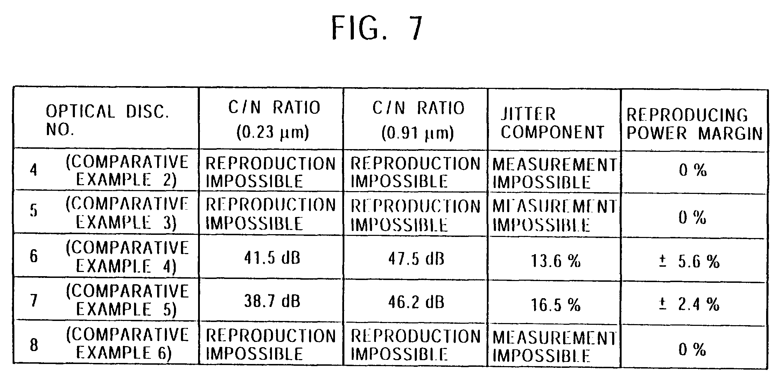

Fig. 6 designates physical characteristics of the recording layers 3 of the optical disks No. 4 to No. 8. On the other hand, Fig. 7 designates measurement results of the ratio of carrier-level against noise-level (C/N), jitter components via recording of random pattern being modulated by (1.7) RLL of 0.17μm of the bit-length, and the reproducing power margin at less than 20% of the jitter components.

As is clear from Fig. 5 and Fig. 7, the magneto-optical recording medium according to the present invention, i.e., the optical disks No. 1 and No. 2 have respectively evidenced distinctive reproduction characteristic. The conceivable reason will be described below.

As was described by referring to Fig. 3, the recording layer 3 is composed of double layer structure comprising the first magnetic film 31 and the second magnetic film 32. As a result, physical characteristic of the recording layer 3 is complete with synthesis of the characteristics of the first and second magnetic films 31 and 32. In consequence, despite of the growth of the intensity of laser-beam spot, it is possible to stably maintain leaking magnetic field instrumental to the transfer of recorded data from the recording layer 3 onto the reproduction layer 1. In other words, magnetic coupling between the recording layer 3 and the reproduction layer 1 can stably be realized to ensure smooth transfer of recorded data, i.e., a recorded mark from the recording layer 3 onto the reproduction layer 1, thus enabling the magnetically induced super-resolution readout, in this case, based on the CAD-MSR method to be assuredly realized.

Result from the comparative evaluation of the optical disk No. 3 cited as the comparative example 1 was evidenced improper effect of the magnetically induced super-resolution readout method. Conceivably, this is because the magnetizing directions of the first magnetic film 31 and the second magnetic film 32 are inverse from each other due to difference in the composition of the predominant metal components, thus resulting in the decreased leaking magnetic field generated by magnetization of the recording layer 3.

It should be understood in reference to the first and second embodiments of the present invention that actual composition of the first and second magnetic films 31 and 32 is not solely limited to those which have been specified above, but it is also possible for the invention to compose them with the magnetic material comprising compensation composition through transition-metal-predominant composition at room temperature and having an easy axis of magnetization in the vertical direction with regard to the film surface, i.e., comprising perpendicular magnetized film, with any of those magnetic materials capable of preserving required coercive force at room temperature and in the course of reproduction for example where the suggested magnetic material comprises DyFeCo, GdTbFeCo, DyTbFeCo, GdDyFeCo, or the like, for example.

Further, it should also be understood that the composition of the magnetic layer 3 of the magneto-optical recording medium of the present invention is not solely limited to the first and second magnetic films 31 and 32, but it is also possible to compose the magnetic layer 3 with triple-layer structure comprising the first, second, and the third magnetic films or with multiple layers having three or more layers.

Next, another embodiment by way of composing the magnetic layer 3 with triple-layer structure comprising the first, second, and the third layers, will be described below. However, the scope of the invention is not limited to this embodiment.

〈The Third Embodiment〉

In this embodiment, except for the provision of the recording layer 3 comprising three layers as shown in Fig. 2, composition of the magneto-optical recording medium of the present invention has been realized via the method and structure exactly identical to the one used for implementing the first embodiment.

To realize the third embodiment, the first magnetic film 31 comprises 10nm thick GdFeCo comprising noticeably magnetizable transition-metal-predominant composition at room temperature. On the other hand, the second magnetic film 32 comprises of 30nm thick TbFeCo comprising insignificantly magnetizable transition-metal-predominant composition at room temperature. In addition, the third magnetic film 33 comprises 30nm thick TbFeCo insignificantly magnetizable compensation composition at room temperature. The magneto-optical disk prepared for the third embodiment will be referred to as an optical disk No. 9 in the following description.

〈The Fourth and Fifth Embodiments〉

The magneto-optical recording media according to the fourth and fifth embodiments of the present invention were respectively formed with the same structure as was provided for the third embodiment except for the modified compositions of the first through third magnetic film 31, 32, and 33 of the recording layer 3. The magneto-optical recording media according to the fourth and fifth embodiments will be referred to as optical disks No. 10 and No. 11.

〈Comparative Example 7〉

The magneto-optical recording medium according to the seventh comparative example was prepared with the same structure as was provided for the third embodiment with the exception of the third magnetic film 33 of the recording layer 3, which comprises a rare-earth metal predominant composition at room temperature. The magneto-optical recording medium prepared for the seventh comparative example will be referred to as an optical disk No. 12.

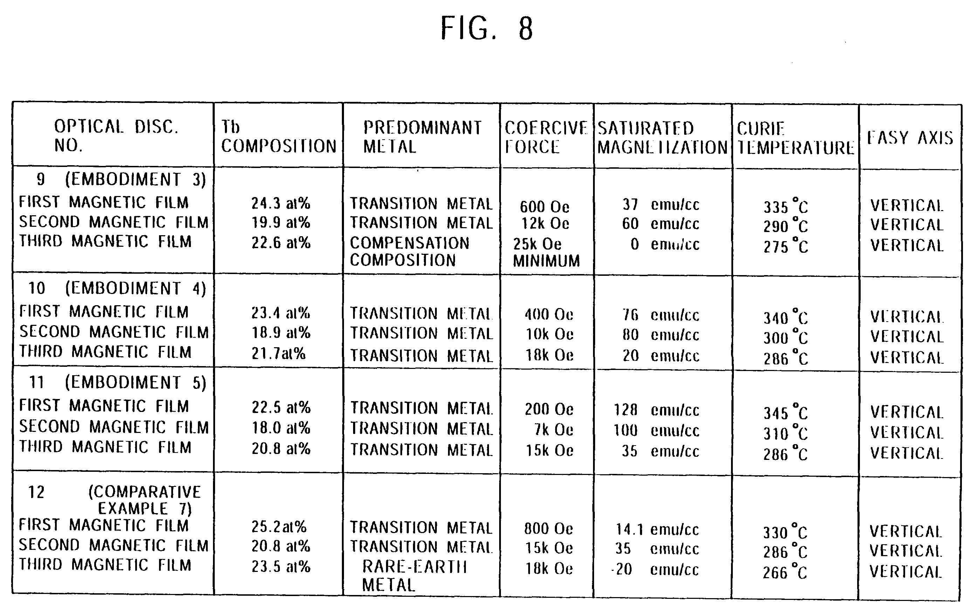

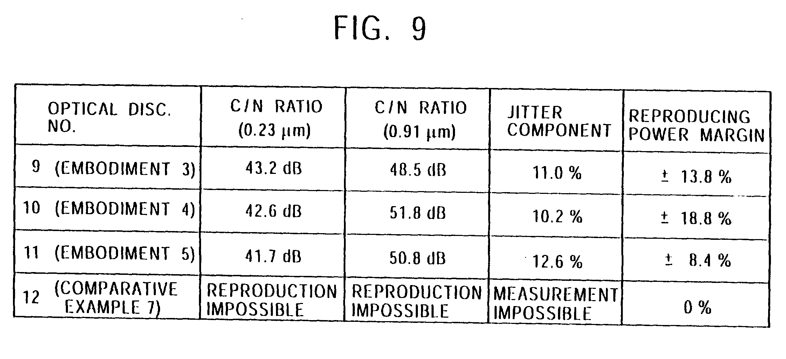

Results of the evaluation of those physical characteristics described above and reproduction characteristic of the optical disks No. 9 through No. 12 are respectively shown in Fig. 8 and Fig. 9.

In Fig. 8, in column of composition, numerical values of the first magnetic film designate composition of Gd, whereas numerical values of the second and third magnetic films respectively designate composition of Tb.

〈The Eighth Embodiment〉

After completing fabrication of the magneto-optical recording medium (i.e., the optical disk No. 10) according to the fourth embodiment of the present invention, based on the above-referred CAD-MSR method, reproduction of recorded data signal was executed by replacing a conventional object lens with an object lens having a numerical aperture N.A. of 0.7.

〈Comparative Example 8〉

After completing fabrication of the magneto-optical recording medium (i.e., the optical disk No. 6) according to the fourth comparative example, based on the above-referred CAD-MSR method, reproduction of recorded data signal was executed by replacing a conventional object lens with an object lens having a numerical aperture N.A. of 0.7.

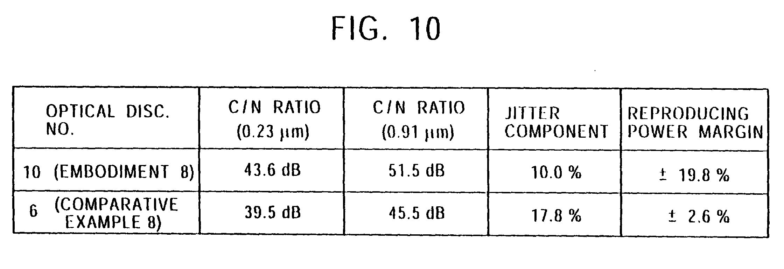

Measurement results of the reproduction characteristics of the eighth embodiment of the present invention and the eighth comparative example are shown in Fig. 10.

As is clear from Fig. 10, even when executing magnetically induced super resolution readout process by way of utilizing such an object lens provided with a greater numerical aperture N.A., it is quite evident that, compared to the magneto-optical recording medium (i.e., the optical disk No. 6) comprising a single-layer magnetic layer 3, the magneto-optical recording medium (i.e., the optical disk No. 10) according to the present invention has realized significant improvement in the carrier-level to noise-level (C/N) ratio, jitter component, and in the reproduction power margin.

Conceivably, this is attributable to the reason explained below. As a result of forming the triple-layer recording layer 3 comprising the first, the second, and the third magnetic films 31, 32, and 33, individual characteristics of the magnetic films 31, 32, and 33, have been synthesized into the integral characteristic of the recording layer 3. In consequence, despite of the rise of the intensity of laser-beam spot relative to the increased numerical aperture N. A. of the object lens, leaking magnetic field attribute to the transfer of recorded data, i.e., a recorded mark, from the recording layer 3 onto the reproduction layer 1 can stably be maintained.

As a result, it is conceived that transfer of the recorded data, in other words, recorded mark from the recording layer 3 onto the reproduction layer 1 had been carried out quite smoothly, and that the magnetically induced super-resolution readout, in this case, according to the CAD-MSR method had been implemented successfully.

Composition of the triple-layer structure of the recording layer 3 comprising the first, the second, and the third magnetic films 31, 32, and 33, is not solely limited to the above-referred embodiments. Instead, it is also practicable to compose the recording layer 3 with perpendicular magnetized film having an easy axis of magnetization in the vertical direction with regard to the film surface by way of composing the perpendicularly magnetized film with compensation composition through transition-metal-predominant composition at room temperature. The perpendicularly magnetized film may also be made of such an alloy, for example, including DyFeCo, GdTbFeCo, DyTbFeCo, or GdDyFeCo, which are respectively the magnetic material capable of retaining required coercive force at room temperature or in the course of executing data reproduction process.

The above description has discretely referred to the case of utilizing a blue-purple laser beam and the case of utilizing the object lens having a large numerical aperture. However, the present invention is also applicable to the method of executing the magnetically induced super-resolution readout by jointly utilizing both the blue-purple laser beam and the object lens having a large numerical aperture for fabricating the magneto-optical recording medium related to the present invention. Execution of this method also results in the significant improvement of the C/N ratio, reduction of jitter component, and a higher reproducing power margin.

The serial arrangement of the magnetic films 31 through 33 in the vertical direction for composing the recording layer 3 can optionally be selected for any of the above-referred embodiments of the invention.

According to the practical form of the embodiment of the invention shown in Fig. 1 and Fig. 2, the above-referred layer-components have serially been formed on the transparent substrate 10 to enable the laser beam to irradiate them from the side of the transparent substrate 10. On the other hand, when introducing such a method for causing the laser beam to irradiate them in the direction opposite to the substrate, sequence of building up the layer-components may be reversed from the arrangement shown in Fig. 1 and Fig. 2. In this case, the transparent substrate 10 may be replaced with an opaque substrate.

In the above-referred practical aspect for embodying the present invention, recorded data is reproduced via magnetically induced super resolution readout based on the CAD-MSR method. However, the inventive method also provides excellent effect when being applied to such a magneto-optical recording medium which is subject to magnetically induced super resolution readout process including a process of transferring the recorded mark from the recording layer onto the reproduction layer such as FAD-MSR, RAD-MSR, or DWDD, or MAMMOS, or the like, for example. When executing any of these methods, the objective recording medium comprises at least a reproduction layer and a recording layer comprising multiple layer-built films. However, composition of the layer-components may be subject to a variety of changes or modifications.

As is apparent from the above description, the present invention provides a magneto-optical recording medium being reproduced in accordance with the magnetically induced super resolution readout process via irradiation with a blue-purple laser beam or via utilization of such an object lens formed with a large numerical aperture or by way of jointly utilizing a blue-purple laser beam and an object lens formed with a large numerical aperture. According to the present invention, the recording layer of the magneto-optical recording medium comprises at least the first and the second magnetic films each made of a rare-earth transition-metal magnetic film whose composition ranges from compensation composition to transition-metal-predominant composition at room temperature, whereby making it possible to effectively realize magnetic bonding between the recording layer and the reproduction layer to eventually result in the significant improvement of the carrier-level to noise-level (C/N) ratio, significant reduction of the jitter components, and significant rise of the reproducing power margin.

Although the invention has been described in its preferred form with a certain degree of particularity, obviously many changes and variations are possible therein. It is therefore to be understood that the present invention may be practiced otherwise than as specifically described herein without departing from the scope and the sprit thereof.

## Claims

1. A magneto-optical recording medium comprising at least a reproduction layer and a recording layer, which is subject to a magnetically induced super resolution readout process by irradiation of a blue-purple laser beam, wherein:

   said recording layer comprises at least a first magnetic film and a second magnetic film each of which comprises a rare-earth transition-metal magnetic film whose composition ranging from compensation composition to transition-metal-predominant composition at room temperature, and whose Curie temperature being different from each other.

2. A magneto-optical recording medium comprising at least a reproduction layer and a recording layer, which is subject to a magnetically induced super resolution readout process by irradiation of a blue-purple laser beam, wherein:

   said recording layer comprises at least a first magnetic film and a second magnetic film each of which comprises a rare-earth transition-metal magnetic film whose composition ranging from compensation composition to transition-metal-predominant composition at room temperature, and whose saturated magnetization being different from each other.

3. A magneto-optical recording medium comprising at least a reproduction layer and a recording layer, which is subject to a magnetically induced super-resolution readout process via an object lens having a numerical aperture of 0.7 or more, wherein:

   said recording layer comprises at least a first magnetic film and a second magnetic film each of which comprises a rare-earth transition-metal magnetic film whose composition ranging from compensation composition to transition-metal-predominant composition at room temperature, and whose Curie temperature being different from each other.

4. A magneto-optical recording medium comprising at least a reproduction layer and a recording layer, which is subject to a magnetically induced super resolution readout process via an object lens having a numerical aperture of 0.7 or more, wherein:

   said recording layer comprises at least a first magnetic film and a second magnetic film each of which comprises a rare-earth transition metal magnetic film whose composition ranging from compensation composition to transition-metal-predominant composition at room temperature, and whose saturated magnetization being different from each other.

5. The magneto-optical recording medium according to Claim 1, wherein said first and second magnetic films of said recording layer comprise a TbFeCo-based rare-earth transition-metal magnetic film.

6. The magneto-optical recording medium according to Claim 2, wherein said first and second magnetic films of said recording layer comprise a TbFeCo-based rare-earth transition-metal magnetic film.

7. The magneto-optical recording medium according to Claim 3, wherein said first and second magnetic films of said recording layer comprise a TbFeCo-based rare-earth transition-metal magnetic film.

8. The magneto-optical recording medium according to Claim 4, wherein said first and second magnetic films of said recording layer comprise a TbFeCo-based rare-earth transition-metal magnetic film.

9. The magneto-optical recording medium according to Claim 1, wherein one of said first and second magnetic films of said recording layer comprises a GdFeCo-based rare-earth transition-metal magnetic film, and the other one comprises a TbFeCo-based rare-earth transition-metal magnetic film.

10. The magneto-optical recording medium according to Claim 2, wherein one of said first and second magnetic films of said recording layer comprises a GdFeCo-based rare-earth transition-metal magnetic film, and the other one comprises a TbFeCo-based rare-earth transition-metal magnetic film.

11. The magneto-optical recording medium according to Claim 3, wherein one of said first and second magnetic films of said recording layer comprises a GdFeCo-based rare-earth transition-metal magnetic film, and the other one comprises a TbFeCo-based rare-earth transition-metal magnetic film.

12. The magneto-optical recording medium according to Claim 4, wherein one of said first and second magnetic films of said recording layer comprises a GdFeCo-based rare-earth transition-metal magnetic film, and the other one comprises a TbFeCo-based rare-earth transition-metal magnetic film.

13. The magneto-optical recording medium according to Claim 1, wherein:

said recording layer further comprises a third magnetic film comprising a rare-earth transition-metal whose composition ranging from compensation composition to transition-metal-predominant composition at room temperature, and whose Curie temperature being different from the Curie temperatures of said first and second magnetic films; and
said first, second, and third magnetic films individually comprises a TbFeCo-based rare-earth transition-metal magnetic film.

14. The magneto-optical recording medium according to Claim 2, wherein:

said recording layer further comprises a third magnetic film comprising a rare-earth transition-metal whose composition ranging from compensation composition to transition-metal-predominant composition at room temperature, and whose saturated magnetization being different from the saturated magnetization of said first and second magnetic films; and
said first, second, and third magnetic films individually comprises a TbFeCo-based rare-earth transition-metal magnetic film.

15. The magneto-optical recording medium according to Claim 3, wherein:

said recording layer further comprises a third magnetic film comprising a rare-earth transition-metal whose composition ranging from compensation composition to transition-metal-predominant composition at room temperature, and whose Curie temperature being different from the Curie temperatures of said first and second magnetic films; and
said first, second, and third magnetic films individually comprises a TbFeCo-based rare-earth transition-metal magnetic film.

16. The magneto-optical recording medium according to Claim 4, wherein:

said recording layer further comprises a third magnetic film comprising a rare-earth transition-metal whose composition ranging from compensation composition to transition-metal-predominant composition at room temperature, and whose saturated magnetization being different from the saturated magnetization of said first and second magnetic films; and
said first, second, and third magnetic films individually comprises a TbFeCo-based rare-earth transition-metal magnetic film.

17. The magneto-optical recording medium according to Claim 1, wherein:

said recording layer further comprises a third magnetic film comprising a rare-earth transition-metal whose composition ranging from compensation composition to transition-metal-predominant composition at room temperature, and whose Curie temperature being different from the Curie temperatures of said first and second magnetic films;

said first magnetic film comprises a GdFeCo-based rare-earth transition-metal magnetic film; and

said second and third magnetic films comprise a TbFeCo-based rare-earth transition-metal magnetic film.

**18.** The magneto-optical recording medium according to Claim 2, wherein:

said recording layer further comprises a third magnetic film comprising a rare-earth transition-metal whose composition ranging from compensation composition to transition-metal-predominant composition at room temperature, and whose saturated magnetization being different from the saturated magnetization of said first and second magnetic films;

said first magnetic film comprises a GdFeCo-based rare-earth transition-metal magnetic film; and

said second and third magnetic films comprise a TbFeCo-based rare-earth transition-metal magnetic film.

**19.** The magneto-optical recording medium according to Claim 3, wherein:

said recording layer further comprises a third magnetic film comprising a rare-earth transition-metal whose composition ranging from compensation composition to transition-metal-predominant composition at room temperature, and whose Curie temperature being different from the Curie temperatures of said first and second magnetic films:

said first magnetic film comprises a GdFeCo-based rare-earth transition-metal magnetic film; and

said second and third magnetic films comprise a TbFeCo-based rare-earth transition-metal magnetic film.

**20.** The magneto-optical recording medium according to Claim 4, wherein:

said recording layer further comprises a third magnetic film comprising a rare-earth transition-metal whose composition ranging from compensation composition to transition-metal-predominant composition at room temperature, and whose saturated magnetization being different from the saturated magnetization of said first and second magnetic films;

said first magnetic film comprises a GdFeCo-based rare-earth transition-metal magnetic film; and

said second and third magnetic films comprise a TbFeCo-based rare-earth transition-metal magnetic film.

FIG. 1

FIG. 2

FIG. 3A

Ms
$Ms_{R1}$
ROOM TEMPERATURE
$T_R$
$T_H$
$Tc_1$
TEMPERATURE

FIG. 3B

$Ms_{R2}$
ROOM TEMPERATURE
$T_R$
$T_H$
$Tc_2$
TEMPERATURE

FIG. 3C

Ms
$Ms_{R3}$
ROOM TEMPERATURE
$T_R$
$T_H$
$Tc_1$
$Tc_2$
TEMPERATURE

## FIG. 4

| OPTICAL DISC. NO. | COMPOSITION OF THE SECOND MAGNETIC FILM | | | | | |
|---|---|---|---|---|---|---|
| | Tb COMPOSITION | PREDOMINANT METAL | COERCIVE FORCE | SATURATED MAGNETIZATION | CURIE TEMPERATURE | EASY AXIS |
| 1 (EMBODIMENT 1) | 22.6 at% | COMPENSATION COMPOSITION | 25k Oe MINIMUM | 0 $emu/cc$ | 275 °C | VERTICAL |
| 2 (EMBODIMENT 2) | 20.8 at% | TRANSITION METAL | 15k Oe | 35 $emu/cc$ | 286 °C | VERTICAL |
| 3 (COMPARATIVE EXAMPLE 1) | 24.3 at% | RARE-EARTH METAL | 15k Oe | -40 $emu/cc$ | 260 °C | VERTICAL |

EP 1 094 455 A2

# FIG. 5

| OPTICAL DISC. NO. | C/N RATIO (0.23 μm) | C/N RATIO (0.91 μm) | JITTER COMPONENT | REPRODUCING POWER MARGIN |
|---|---|---|---|---|
| 1 (EMBODIMENT 1) | 43.2 dB | 48.5 dB | 11.8 % | ± 10.8 % |
| 2 (EMBODIMENT 2) | 43.4 dB | 49.9 dB | 10.8 % | ± 14.6 % |
| 3 (COMPARATIVE EXAMPLE 1) | REPRODUCTION IMPOSSIBLE | REPRODUCTION IMPOSSIBLE | MEASUREMENT IMPOSSIBLE | 0 % |

EP 1 094 455 A2

## FIG. 6

| OPTICAL DISC. NO. | RECORDING LAYER (SINGLE LAYER) | | | | | |
| --- | --- | --- | --- | --- | --- | --- |
| | Tb COMPOSITION | PREDOMINANT METAL | COERCIVE FORCE | SATURATED MAGNETIZATION | CURIE TEMPERATURE | EASY AXIS |
| 4 (COMPARATIVE EXAMPLE 2) | 24.3 at% | RARE-EARTH METAL | 15k Oe | -40 $emu/cc$ | 260 °C | VERTICAL |
| 5 (COMPARATIVE EXAMPLE 3) | 22.6 at% | COMPENSATION COMPOSITION | 25k Oe MINIMUM | 0 $emu/cc$ | 275 °C | VERTICAL |
| 6 (COMPARATIVE EXAMPLE 4) | 20.8 at% | TRANSITION METAL | 15k Oe | 35 $emu/cc$ | 286 °C | VERTICAL |
| 7 (COMPARATIVE EXAMPLE 5) | 18.9 at% | TRANSITION METAL | 7k Oe | 80 $emu/cc$ | 300 °C | VERTICAL |
| 8 (COMPARATIVE EXAMPLE 6) | 17.0 at% | TRANSITION METAL | 4k Oe | 120 $emu/cc$ | 320 °C | VERTICAL |

EP 1 094 455 A2

# FIG. 7

| OPTICAL DISC. NO. | | C/N RATIO (0.23 μm) | C/N RATIO (0.91 μm) | JITTER COMPONENT | REPRODUCING POWER MARGIN |
|---|---|---|---|---|---|
| 4 | (COMPARATIVE EXAMPLE 2) | REPRODUCTION IMPOSSIBLE | REPRODUCTION IMPOSSIBLE | MEASUREMENT IMPOSSIBLE | 0 % |
| 5 | (COMPARATIVE EXAMPLE 3) | REPRODUCTION IMPOSSIBLE | REPRODUCTION IMPOSSIBLE | MEASUREMENT IMPOSSIBLE | 0 % |
| 6 | (COMPARATIVE EXAMPLE 4) | 41.5 dB | 47.5 dB | 13.6 % | ± 5.6 % |
| 7 | (COMPARATIVE EXAMPLE 5) | 38.7 dB | 46.2 dB | 16.5 % | ± 2.4 % |
| 8 | (COMPARATIVE EXAMPLE 6) | REPRODUCTION IMPOSSIBLE | REPRODUCTION IMPOSSIBLE | MEASUREMENT IMPOSSIBLE | 0 % |

EP 1 094 455 A2

## FIG. 8

| OPTICAL DISC. NO. | Tb COMPOSITION | PREDOMINANT METAL | COERCIVE FORCE | SATURATED MAGNETIZATION | CURIE TEMPERATURE | EASY AXIS |
|---|---|---|---|---|---|---|
| 9 (EMBODIMENT 3) | | | | | | |
| FIRST MAGNETIC FILM | 24.3 at% | TRANSITION METAL | 600 Oe | 37 emu/cc | 335 °C | VERTICAL |
| SECOND MAGNETIC FILM | 19.9 at% | TRANSITION METAL | 12k Oe | 60 emu/cc | 290 °C | VERTICAL |
| THIRD MAGNETIC FILM | 22.6 at% | COMPENSATION COMPOSITION | 25k Oe MINIMUM | 0 emu/cc | 275 °C | VERTICAL |
| 10 (EMBODIMENT 4) | | | | | | |
| FIRST MAGNETIC FILM | 23.4 at% | TRANSITION METAL | 400 Oe | 76 emu/cc | 340 °C | VERTICAL |
| SECOND MAGNETIC FILM | 18.9 at% | TRANSITION METAL | 10k Oe | 80 emu/cc | 300 °C | VERTICAL |
| THIRD MAGNETIC FILM | 21.7at% | TRANSITION METAL | 18k Oe | 20 emu/cc | 286 °C | VERTICAL |
| 11 (EMBODIMENT 5) | | | | | | |
| FIRST MAGNETIC FILM | 22.5 at% | TRANSITION METAL | 200 Oe | 128 emu/cc | 345 °C | VERTICAL |
| SECOND MAGNETIC FILM | 18.0 at% | TRANSITION METAL | 7k Oe | 100 emu/cc | 310 °C | VERTICAL |
| THIRD MAGNETIC FILM | 20.8 at% | TRANSITION METAL | 15k Oe | 35 emu/cc | 286 °C | VERTICAL |
| 12 (COMPARATIVE EXAMPLE 7) | | | | | | |
| FIRST MAGNETIC FILM | 25.2at% | TRANSITION METAL | 800 Oe | 14.1 emu/cc | 330 °C | VERTICAL |
| SECOND MAGNETIC FILM | 20.8 at% | TRANSITION METAL | 15k Oe | 35 emu/cc | 286 °C | VERTICAL |
| THIRD MAGNETIC FILM | 23.5 at% | RARE-EARTH METAL | 18k Oe | -20 emu/cc | 266 °C | VERTICAL |

EP 1 094 455 A2

# FIG. 9

| OPTICAL DISC. NO. | C/N RATIO (0.23 μm) | C/N RATIO (0.91 μm) | JITTER COMPONENT | REPRODUCING POWER MARGIN |
|---|---|---|---|---|
| 9 (EMBODIMENT 3) | 43.2 dB | 48.5 dB | 11.0 % | ± 13.8 % |
| 10 (EMBODIMENT 4) | 42.6 dB | 51.8 dB | 10.2 % | ± 18.8 % |
| 11 (EMBODIMENT 5) | 41.7 dB | 50.8 dB | 12.6 % | ± 8.4 % |
| 12 (COMPARATIVE EXAMPLE 7) | REPRODUCTION IMPOSSIBLE | REPRODUCTION IMPOSSIBLE | MEASUREMENT IMPOSSIBLE | 0 % |

EP 1 094 455 A2

## FIG. 10

| OPTICAL DISC. NO. | C/N RATIO (0.23 μm) | C/N RATIO (0.91 μm) | JITTER COMPONENT | REPRODUCING POWER MARGIN |
|---|---|---|---|---|
| 10 (EMBODIMENT 8) | 43.6 dB | 51.5 dB | 10.0 % | ± 19.8 % |
| 6 (COMPARATIVE EXAMPLE 8) | 39.5 dB | 45.5 dB | 17.8 % | ± 2.6 % |

EP 1 094 455 A2

# FIG. 11

# FIG. 12